# EUROPEAN PATENT APPLICATION

(11) **EP 3 670 828 A1**
(43) Date of publication of application: **24.06.2020**
(21) Application number: 18213280.3
(22) Date of filing: 18.12.2018
(51) Int. Cl.: E21B 43/08

(54) **SEPARATING DEVICE AND USE OF A SEPARATING DEVICE**

(71) Applicant: 3M Innovative Properties Company, Saint Paul, MN 55133-3427 (US)
(72) Inventor: Meschke, Frank, 87474 Buchenberg (DE); Victor, Georg, 87487 Wiggensbach (DE); Rauch, Wolfgang, 88260 Argenbühl (DE); Lange, Dietrich, 87480 Weitnau (DE); Uibel, Krishna, 87448 Waltenhofen (DE); Barth, Peter, 87439 Kempten (DE); Joly, Samuel, 87437 Kempten (DE)
(74) Representative: Mössner, Brigitte

(57) **Abstract**

The present disclosure relates to a separating device for removing solid particles from fluids, and to the use of said separating device for removing solid particles from fluids.

## Description

### Technical Field

The present disclosure relates to a separating device for the removal of solid particles from a fluid.

### Background

Such separating devices are required in many oil and gas extraction wells. Mineral oil and natural gas are stored in naturally occurring underground reservoirs, the oil or gas being distributed in more or less porous and permeable mineral layers. The aim of every oil or gas drill hole is to reach the reservoir and exploit it in such a way that, as far as possible, only saleable products such as oil and gas are extracted, while undesired by-products are minimized or even avoided completely. The undesired by-products in oil and gas extraction include solid particles such as sands and other mineral particles that are entrained from the reservoir up to the borehole by the liquid or gas flow.

Since the mineral sands are often abrasive, the influx of such solids into the production tubing and pump cause considerable undesired abrasive and erosive wear on all of the technical internals of the borehole. It is therefore endeavoured to free the production flow of undesired sands directly after it leaves the reservoir, that is to say while it is still in the borehole, by filter systems.

Problems of abrasion and erosion in the removal of solid particles from liquid and gas flows are not confined to the oil and gas industry, but may also occur in the extraction of water. Water may be extracted for the purpose of obtaining drinking water or else for the obtainment of geothermal energy. The porous, often loosely layered reservoirs of water have the tendency to introduce a considerable amount of abrasive particles into the material that is extracted. In these applications too, there is the need for abrasion- and erosion-resistant filters. Also in the extraction of ore and many other minerals, there are problems of abrasion and erosion in the removal of solid particles from liquid and gas flows.

In oil and gas extraction, the separation of undesired particles is usually achieved today by using filters that are produced by spirally winding and welding steel forming wires onto a perforated basepipe. Such filters are referred to as "wire wrap filters". Another commonly used type of construction for filters in oil and gas extraction is that of wrapping a perforated basepipe with metal screening meshes. These filters are referred to as "metal mesh screens". Both methods provide filters with effective screen apertures of 75 µm to 350 µm. Depending on the type of construction and the planned intended use of both these types of filter, the filtering elements are additionally protected from mechanical damage during transport and introduction into the borehole by an externally fitted, coarse-mesh cage. The disadvantage of these types of filter is that, under the effect of the abrasive particles flowing at high speed, metal structures are subject to rapid abrasive wear, which quickly leads to destruction of the filigree screen structures. Such high-speed abrasive flows often occur in oil and/or gas extraction wells, which leads to considerable technical and financial maintenance expenditure involved in changing the filters. There are even extraction wells which, for reasons of these flows, cannot be controlled by the conventional filtering technique, and therefore cannot be commercially exploited. Conventional metallic filters are subject to abrasive and erosive wear, since steels, even if they are hardened, are softer than the particles in the extraction wells, which sometimes contain quartz.

In order to counter the abrasive flows of sand with abrasion-resistant screen structures, US 8,893,781 B2, US 8,833,447 B2, US 8,662,167 B2 and WO 2016/018821 A1 propose filter structures in which the filter gaps, that is to say the functional openings of the filter, are created by stacking specially formed densely sintered annular discs of a brittle-hard material, preferably of a ceramic material. In this case, spacers are arranged on the upper side of annular discs, distributed uniformly over the circular circumference of the discs.

There is still a need to provide an improved separating device for the removal of solid particles from fluids, in particular from oil, gas and water. Particularly, there is a need to provide a separating device having improved inflow characteristics.

As used herein, "a", "an", "the", "at least one" and "one or more" are used interchangeably. The term "comprise" shall include also the terms "consist essentially of" and "consists of".

### Summary

In a first aspect, the present disclosure relates to a separating device for removing solid particles from fluids, comprising a stack of at least three annular discs defining a central annular region along a central axis, each annular disc having an upper side and an underside, wherein the upper side of each annular disc each has at least three spacers, and wherein the upper side of each annular disc contacts the underside of the adjacent annular disc defining a separating gap, and wherein the separating device has one or more of the following features:
(i) the at least three spacers are distributed non-uniformly over the circumference of the annular discs,
(ii) the inner circumference of the annular discs has a polygon shape,
(iii) the annular discs have on their upper side one or more recesses in axial direction, wherein the height of the separating gap corresponds to the width of the recesses in circumferential direction, and wherein the height of the recesses in axial direction is smaller than the height of the annular discs, and wherein the recesses are extending from the outer circumference to the inner circumference of the annular discs.

In another aspect, the present disclosure also relates to a separating device for removing solid particles from fluids, comprising a stack of at least three annular discs defining a central annular region along a central axis, each annular disc having an upper side and an underside, wherein the upper side and the underside of every second annular disc in the stack each has at least three spacers, and wherein the upper side and the underside of the respectively adjacent annular discs do not comprise any spacers, and wherein the upper side of each annular disc contacts the underside of the adjacent annular disc defining a separating gap, and wherein the separating device has one or more of the following features:
(i) the at least three spacers of every upper side and of every underside of every second annular disc in the stack are distributed non-uniformly over the circumference of the annular discs,
(ii) the inner circumference of the annular discs has a polygon shape,
(iii) the annular discs have on their upper side and on their underside one or more recesses in axial direction, wherein the height of the separating gap corresponds to the width of the recesses in circumferential direction, and wherein the height of the recesses in axial direction is smaller than the height of the annular discs, and wherein the recesses are extending from the outer circumference to the inner circumference of the annular discs.

In yet a further aspect, the present disclosure relates to the use of a separating device as disclosed herein for removing solid particles from fluids
in a process for extracting fluids from extraction wells, or
in water or in storage installations for fluids, or
in a process for extracting ores and minerals.

The separating device of the present disclosure has improved inflow characteristics.

In some embodiments, in applications where the inflow of fluid loaded with sand and minerals is non-uniformly distributed along the circular circumference of the separating device, the inflow characteristics of the separating device can be adapted to the non-uniformly inflow of fluid. For example, if the separating device is used in a reservoir where most of the inflow is coming from a specific direction, the inflow characteristics of the separating device can be adapted to the inflow coming from this direction.

In some embodiments, the separating device as disclosed herein allows for a larger inflow of fluid into the separating device or a reduced pressure loss, respectively.

### Brief description of the drawings

The present disclosure is explained in more detail on the basis of the drawings, in which
Figure 1 schematically shows the overall view of a separating device as disclosed herein;
Figure 2 shows a cross-sectional view of a separating device as disclosed herein;
Figures 3A - 3G show various details of the stack of annular discs of an embodiment of a separating device as disclosed herein;
Figures 4A - 4E show various details of an annular disc of a further embodiment of a separating device as disclosed herein;
Figures 5A - 5G show various details of the stack of annular discs of a further embodiment of a separating device as disclosed herein;
Figures 6A - 6E show various details of a further embodiment of a separating device as disclosed herein; and
Figures 7A - 7F show various details of a further embodiment of a separating device as disclosed herein.

### Detailed Description

The separating device as disclosed herein may further comprise, alone or in combination,
- a perforated pipe, which is located inside the concentric stack of at least three annular discs and on which the annular discs are stacked,
- an end cap at the upper end of the central annular region and an end cap at the lower end of the central annular region,
- a thermal compensator at the upper end and/or at the lower end of the central annular region,
- a shroud for protection from mechanical damage.

Preferred embodiments and details of the separating device of the present disclosure are explained in more detail below with reference to the drawings.

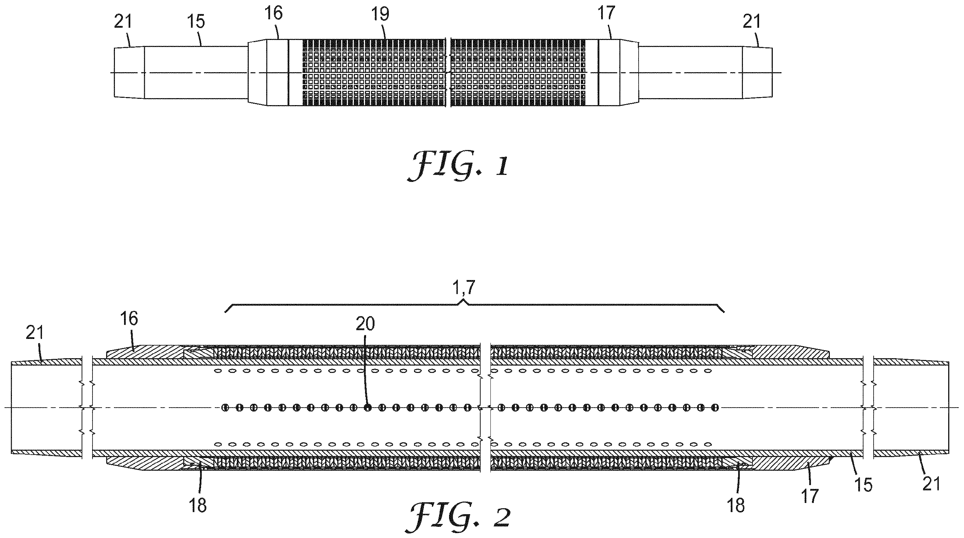

Figure 1 shows the overall view of a separating device according to the present disclosure. Figure 2 shows a cross-sectional view of a separating device according to the present disclosure. The separating device according to the present disclosure comprises a stack of at least three annular discs defining a central annular region 1, 7 along a central axis. The separating device may comprise a perforated pipe 15, on which the annular discs are stacked. The perforated pipe 15 with perforations 20 is located inside the stack 1, 7 of annular discs and is also referred to hereinafter as the base pipe. Usually provided at both ends of the perforated pipe 15 are threads 21, by way of which the separating device can be connected to further components, either to further separating devices or to further components of the extraction equipment. The separating device may comprise an end cap 16 at the upper end of the central annular region and an end cap 17 at the lower end of the central annular region 1, 7, the end caps being firmly connected to the basepipe 15. The separating device may further comprise a tubular shroud 19 (see Figure 1) that can be freely passed through by a flow. The shroud 19 protects the central annular region from mechanical damage during handling and fitting into the borehole. The separating device may also comprise a thermal compensator 18 at the upper end of the central annular region or at the lower end of the central annular region 1, 7, or a thermal compensator 18 at the upper end of the central annular region and at the lower end of the central annular region.

For better understanding, and since the separating device according to the present disclosure is generally introduced into an extraction borehole in vertical alignment, the terms "upper" and "lower" are used here, but the separating device may also be positioned in horizontal orientation in the extraction borehole (in which case, upper typically would refer to the most upstream portion and lower would refer to the most downstream portion of the separating device, when in service).

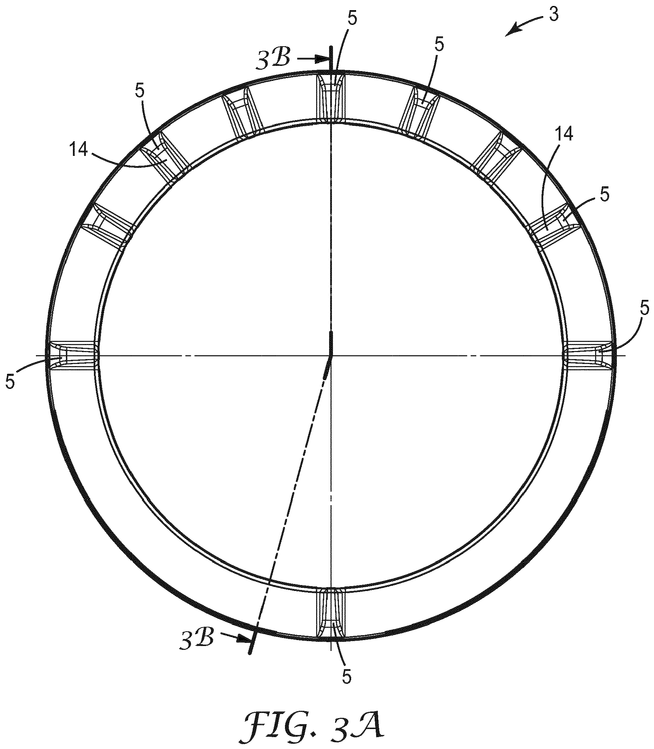

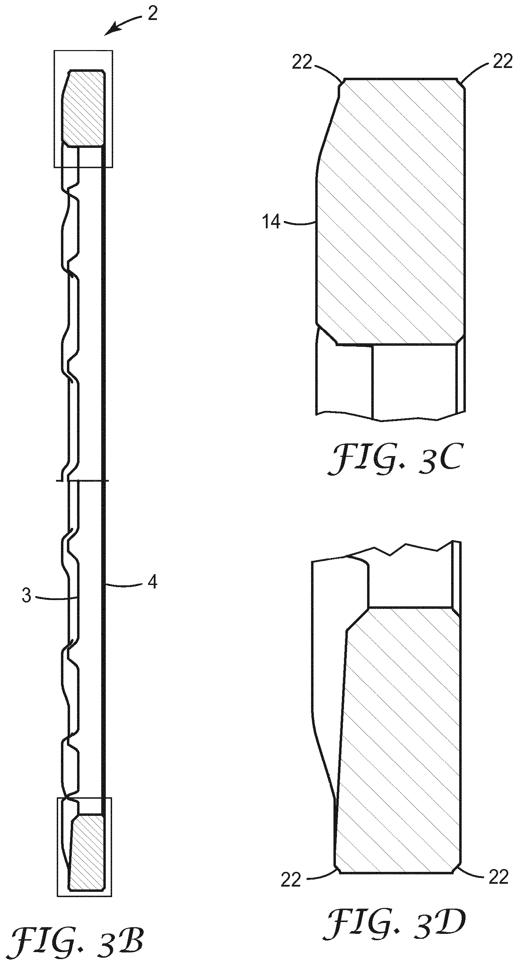

The separating device according to the present disclosure comprises a stack of at least three annular discs defining a central annular region 1, 7 (see Figures 2, 3E, 5E and 7E) along a central axis. The annular discs 2, 8, 11 (see Figures 3A - 3D, 4A - 4E, 5A - 5D, 6A - 6D and 7A - 7D) have an upper side 3, 9, 12 and an underside 4, 10, 13 (see Figures 3B, 4B, 5B, 5F, 6B and 7B).

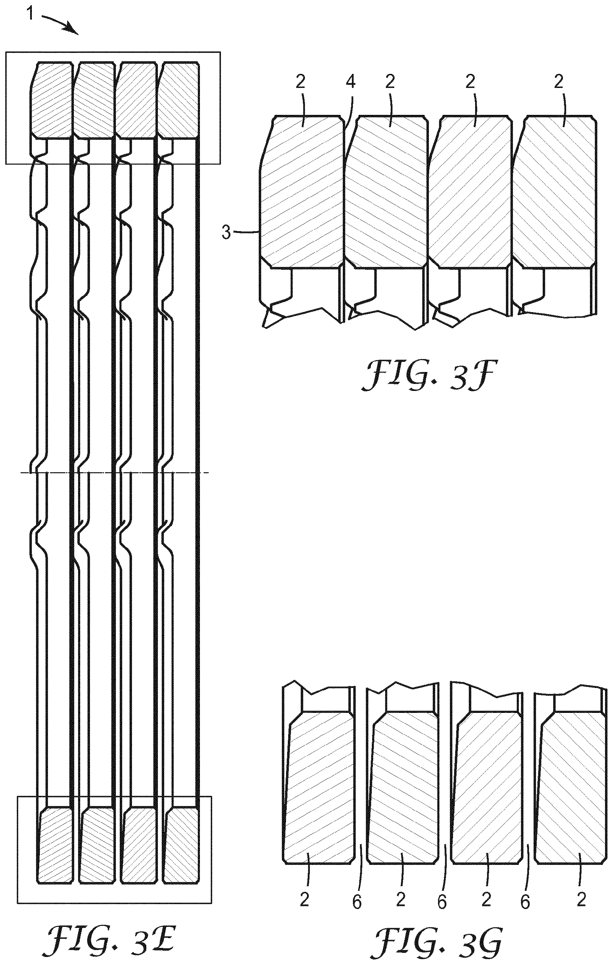

In some embodiments of the separating device disclosed herein, the upper side 3 of each annular disc 2 each has at least three spacers 5 (see Figures 3A, 4A, 6A and 7A), and the underside 4 of each annular disc does not comprise any spacers (see Figures 3B, 4B, 6B and 7B). The upper side 3 of each annular disc 2 contacts the underside 4 of the adjacent annular disc, defining a separating gap 6 (see Figures 3E-3G).

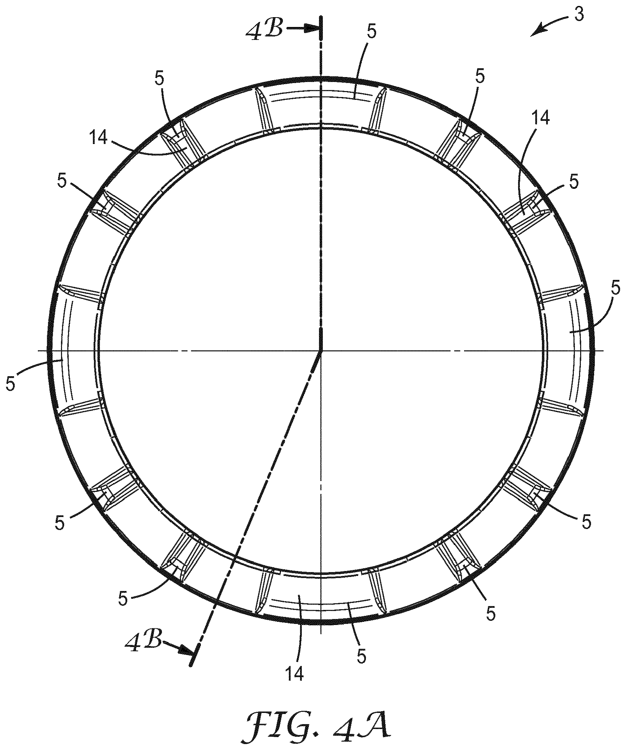

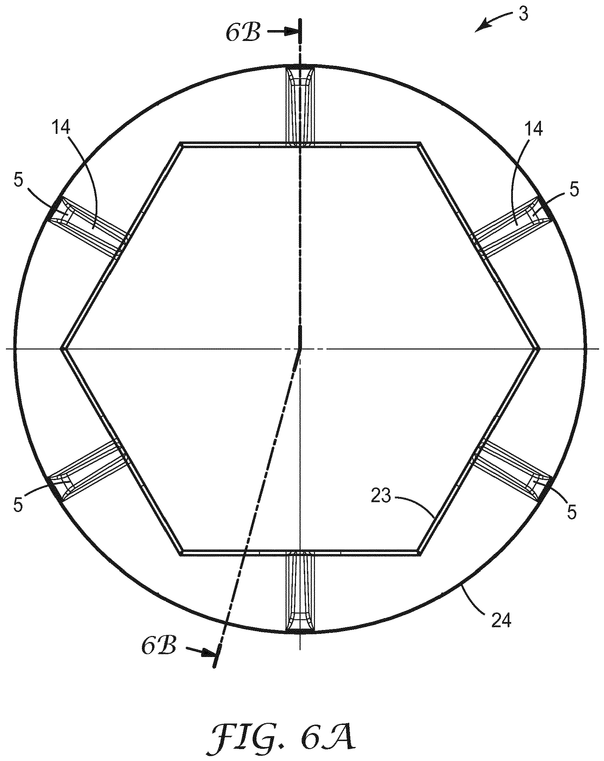

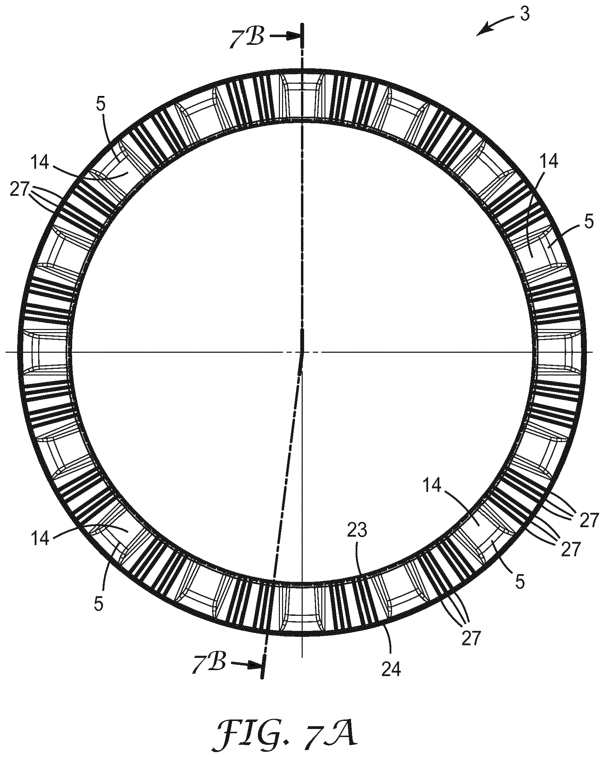

The separating device of these embodiments has one or more of the following features
(i) the at least three spacers 5 are distributed non-uniformly over the circumference of the annular discs 2 (see Figures 3A and 4A),
(ii) the inner circumference 23 of the annular discs 2 has a polygon shape (see Figure 6A),
(iii) the annular discs 2 have on their upper side 3 one or more recesses 27 in axial direction, wherein the height of the separating gap 6 corresponds to the width of the recesses 27 in circumferential direction, and wherein the height of the recesses 27 in axial direction is smaller than the height of the annular discs 2, and wherein the recesses 27 are extending from the outer circumference 24 to the inner circumference 23 of the annular discs 2 (see Figures 7A - 7F).

The contact area 14 of the spacers 5 may be planar, so that the spacers 5 have a planar contact area with the adjacent annular disc (see Figures 3C, 4C, 6C and 7C). The planar contact area 14 is in contact with the adjacent underside 4 of the adjacent annular disc. The annular discs are stacked in such a way that between the individual discs there is in each case a separating gap 6 for the removal of solid particles.

The underside 4 of each annular disc 2 may be formed at right angles to the central axis.

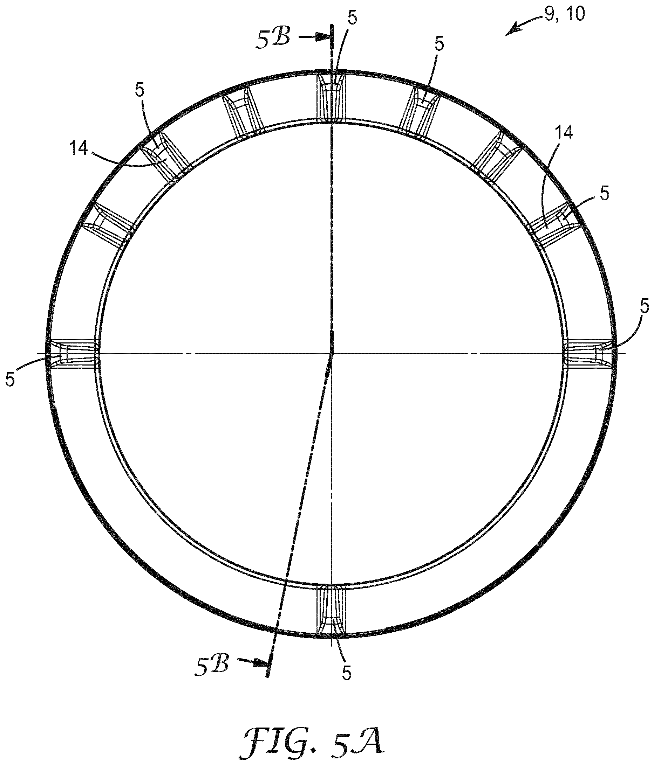

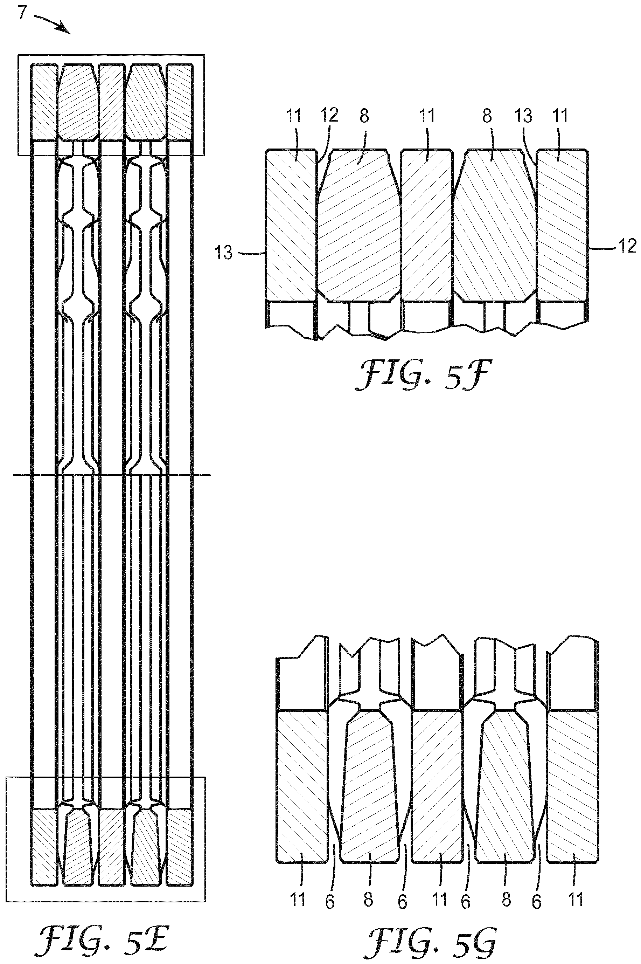

In some further embodiments of the separating device disclosed herein, the upper side 9 and the underside 10 of every second annular disc 8 in the stack each has at least three spacers 5 (see Figures 5A - 5D). The upper side 12 and the underside 13 of the respectively adjacent annular discs 11 do not comprise any spacers (see Figures 5E - 5G). The upper side 9, 12 of each annular disc 8, 11 contacts the underside 10, 13 of the adjacent annular disc, defining a separating gap 6 (see Figures 5E - 5G).

The separating device of these embodiments has one or more of the following features
(i) the at least three spacers 5 of every upper side 9 and of every underside 10 of every second annular disc 8 in the stack are distributed non-uniformly over the circumference of the annular discs 8 (see Figures 5A - 5D),
(ii) the inner circumference 23 of the annular discs 8, 11 has a polygon shape,
(iii) the annular discs 8 have on their upper side 9 and on their underside 10 one or more recesses 27 in axial direction, wherein the height of the separating gap 6 corresponds to the width of the recesses 27 in circumferential direction, and wherein the height of the recesses 27 in axial direction is smaller than the height of the annular discs 8, and wherein the recesses 27 are extending from the outer circumference to the inner circumference of the annular discs 8.

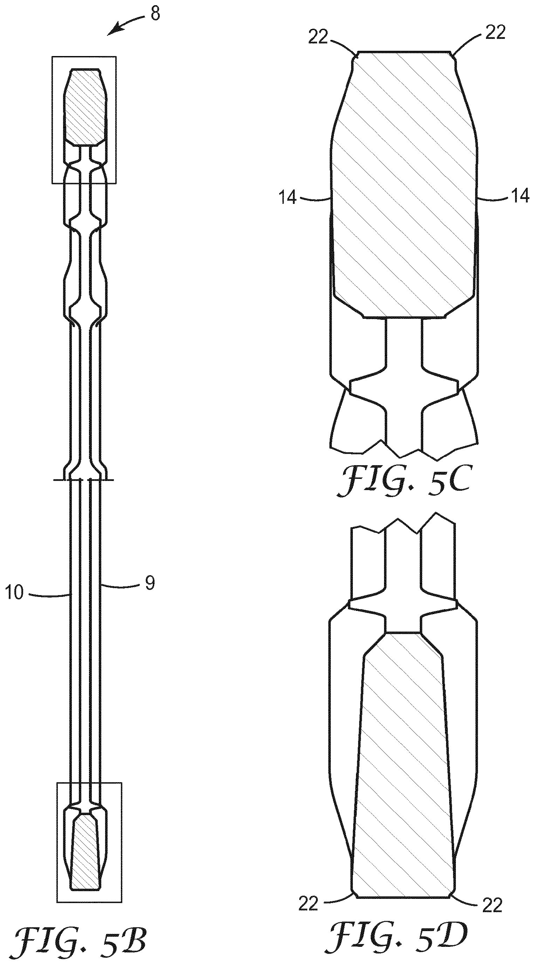

The contact area 14 of the spacers 5 may be planar, so that the spacers 5 have a planar contact area with the adjacent annular disc (see Figures 5C). The planar contact area 14 of the spacers 5 of the upper side 9 of an annular disc 8 is in contact with the underside 13 of the adjacent annular disc, and the planar contact area 14 of the spacers 5 of the underside 10 of an annular disc 8 is in contact with the upper side 12 of the adjacent annular disc. The annular discs are stacked in such a way that between the individual discs there is in each case a separating gap 6 for the removal of solid particles.

Every upper side 12 of an annular disc 11 which does not comprise any spacers may be formed at right angles to the central axis, and every underside 13 of an annular disc 12 which does not comprise any spacers may be formed at right angles to the central axis.

In some embodiments of the separating device disclosed herein, the at least three spacers 5 are distributed non-uniformly over the circumference of the annular discs 2, 8, and the distances between two adjacent spacers on each upper side 3, 9 of an annular disc 2, 8 having at least three spacers and on each underside 10 of an annular disc 8 having at least three spacers have at least two different lengths. The distance between the spacers is measured in the circumferential direction as the distance between the centers of the contact areas of the spacers along the inside diameter.

In some embodiments of the separating device disclosed herein, the at least three spacers 5 are distributed non-uniformly over the circumference of the annular discs 2, 8, and the widths of the spacers in circumferential direction on each upper side 3, 9 of an annular disc 2, 8 having at least three spacers and on each underside 10 of an annular disc 8 having at least three spacers have at least two different lengths. The width of a spacer in circumferential direction is measured as the largest extension of a spacer in circumferential direction.

In some embodiments of the separating device disclosed herein, the at least three spacers 5 are distributed non-uniformly over the circumference of the annular discs 2, 8, and the widths of the spacers in circumferential direction on each upper side 3, 9 of an annular disc 2, 8 having at least three spacers and on each underside 10 of an annular disc 8 having at least three spacers have two different lengths, i.e. the width of an individual spacer 5 in circumferential direction has either a larger first length or a smaller second length. The spacers having a width with the larger first length are distributed in an alternating manner with the spacers having a width with the smaller second length over the circumference of the annular discs. For example, one spacer having a width with the larger first length has an adjacent spacer having a width with the smaller second length, and so on over the circumference of the annular discs. In another example, one spacer having a width with the larger first length has two adjacent spacers having a width with the smaller second length (see Figure 4A) and so on over the circumference of the annular discs. In yet a further example, one spacer having a width with the larger first length has an adjacent spacer having a width with the larger first length and then two adjacent spacers having a width with the smaller second length, and so on over the circumference of the annular discs. In the regions with the spacers having a width with a smaller second length, a higher inflow of fluid is allowed, whereas the spacers having a width with a larger first length ensure the overall mechanical stability of the annular stack. Such a non-uniformly distribution of the spacers is useful in applications where the inflow of fluid loaded with sand and minerals is non-uniformly distributed along the circumference of the separating device. The inflow characteristics of the separating device can be adapted to the non-uniformly inflow.

It is also possible that on one side of the annular discs there is a higher number of spacers whereas on an opposite side of the annular discs there is a lower number of spacers allowing a higher inflow of fluid. This is particularly useful if the separating device is used in a reservoir where most of the inflow is coming from a specific direction, the inflow characteristics of the separating device can be adapted to the inflow coming from this direction.

In some embodiments of the separating device disclosed herein, every upper side 3, 9 of an annular disc 2, 8 having at least three spacers has at least four spacers 5, and every underside 10 of an annular disc 8 having at least three spacers has at least four spacers 5, and the at least four spacers 5 are distributed non-uniformly over the circumference of the annular discs 2, 8, and the distances between two adjacent spacers on each upper side 3, 9 having at least four spacers are decreasing towards one of the spacers 5, and the distances between two adjacent spacers on each underside 10 having at least four spacers are decreasing towards one of the spacers 5 (see Figures 3A and 5A). Every upper side 3, 9 of an annular disc 2, 8 having at least four spacers with distances decreasing towards one of the spacers, and every underside 10 of an annular disc 8 having at least four spacers with distances decreasing towards one of the spacers, may have for example at least 10 spacers. In the region at an opposite side of the region with spacers having decreasing distances, there are fewer spacers allowing a higher inflow of fluid. This is particularly useful if the separating device is used in a reservoir where most of the inflow is coming from a specific direction, the inflow characteristics of the separating device can be adapted to the inflow coming from this direction.

In some embodiments of the separating device disclosed herein, the inner circumference 23 of the annular discs 2, 8, 11 has a polygon shape. Preferably, the polygon is a regular polygon (see Figure 6A). The outer circumference 24 of these annular discs 2, 8, 11 may have a circular shape or may also have a polygon shape. The polygon may have from 3 to 20 edges, preferably 5 to 9 edges. More preferably, the polygon is a hexagon.

With the polygon shape of these annular discs, more volume for annular flow is available at the edges of the polygon shaped annular discs. This allows for a higher fluid flow in the region of the edges of the polygon and for a larger inflow of fluid into the separating device or a reduced pressure loss, respectively.

In some embodiments of the separating device disclosed herein, the annular discs 2 have on their upper side 3 one or more recesses 27 in axial direction (see Figures 7A - 7F). The height of the separating gap 6 corresponds to the width of the recesses 27 in circumferential direction. The height of the recesses 27 in axial direction is smaller than the height of the annular discs 2. The recesses 27 are extending from the outer circumference 23 to the inner circumference 24 of the annular discs 2. The recesses 27 are in the regions between the spacers.

The height of the recesses 27 in axial direction may be from 20 to 80% of the height of the annular discs 2. The height of the annular discs is measured in the region of the spacers 5, at the highest extension in axial direction.

The number of the recesses may be one or more than one and is not specifically limited. For example, up to 10, or up to 50, or up to 100 recesses may be provided. More than 100 recesses are also possible.

By the recesses 27, the gap flow area or inflow area of the separating device can be increased. This allows to increase the inflow of fluid into the separating device and to reduce the pressure loss of the separating device.

In some embodiments of the separating device disclosed herein, the annular discs 8 have on their upper side 9 and on their underside 10 one or more recesses 27 in axial direction (upper side 9 and underside 10 may, for example, correspond to Figure 7A). The height of the separating gap 6 corresponds to the width of the recesses 27 in circumferential direction. The height of the recesses 27 in axial direction is smaller than the height of the annular discs 8. The recesses 27 are extending from the outer circumference 24 to the inner circumference 23 of the annular discs 8. The recesses 27 are in the regions between the spacers.

The sum of the height of the recesses 27 in axial direction on the upper side 9 and of the height of the recesses 27 in axial direction on the underside 10 may be from 20 to 80% of the height of the annular discs 8. The height of the annular discs is measured in the region of the spacers 5, at the highest extension in axial direction.

The number of the recesses may be one or more than one and is not specifically limited. For example, up to 10, or up to 50, or up to 100 recesses may be provided. More than 100 recesses are also possible.

By the recesses 27, the gap flow area or inflow area of the separating device can be increased. This allows to increase the inflow of fluid into the separating device and to reduce the pressure loss of the separating device.

The central annular region can, and typically does, comprise more than 3 annular discs. The number of annular discs in the central annular region can be from 3 to 500, but also larger numbers of annular discs are possible. For example, the central annular region can comprise 50, 100, 250 or 500 annular discs.

The annular discs 2 and the annular discs 8, 11, respectively, of the central annular region 1, 7 are stacked on top of each other, resulting in a stack of annular discs. The annular discs 2 and the annular discs 8, 11, respectively, are stacked and fixed in such a way that between the individual discs there is in each case a separating gap 6 for the removal of solid particles.

Every upper side 3, 9 of an annular disc 2, 8 which has one or more spacers may be inwardly or outwardly sloping, preferably inwardly sloping, in the regions between the spacers (see Figures 3D, 4D, 6D, 7D), and every underside 10 of an annular disc 8 which has one or more spacers may be inwardly or outwardly sloping, preferably inwardly sloping, in the regions between the spacers (see Figure 5D).

If the upper side, or the upper side and underside, respectively, of the annular discs which have at least three spacers, is inwardly or outwardly sloping in the regions between the spacers, in the simplest case, the sectional line on the upper side of the ring cross-section of the annular discs is straight and the ring cross-section of the annular discs in the portions between the spacers is trapezoidal (see Figures 3D, 4D, 5D, 6D, 7D), the thicker side of the ring cross-section having to lie on the respective inlet side of the flow to be filtered. If the flow to be filtered comes from the direction of the outer circumferential surface of the central annular region, the thickest point of the trapezoidal cross-section must lie on the outside and the upper side of the annular discs is inwardly sloping. If the flow to be filtered comes from the direction of the inner circumferential surface of the annular disc, the thickest point of the trapezoidal cross-section must lie on the inside and the upper side of the annular discs is outwardly sloping. The forming of the ring cross-section in a trapezoidal shape, and consequently the forming of a separating gap that diverges in the direction of flow, has the advantage that, after passing the narrowest point of the filter gap, irregularly shaped particles, i.e. non-spherical particles, tend much less to get stuck in the filter gap, for example due to rotation of the particles as a result of the flow in the gap. Consequently, a separating device with a divergent filter gap formed in such a way is less likely to become plugged and clogged than a separating device in which the separating gaps have a filter opening that is constant over the ring cross-section.

The height of the separating gap, i.e. the filter width, may be from 50 to 1000 µm. The height of the separating gap is measured at the position of the smallest distance between two adjacent annular discs.

The annular discs 2, 8, 11 may have a height of 1 to 12 mm. More specifically, the height of the annular discs may be from 2 to 7 mm. The height of the annular discs is the thickness of the annular discs in axial direction.

In some embodiments, the annular discs 8 having at least three spacers on the upper side 9 and the underside 10 have a height of 1 to 12 mm, and the annular discs 11 which do not comprise any spacers may have the same height as the annular discs 8 with spacers, or may be thinner than the annular discs 8 with spacers. The annular discs 11 may have a height of 2 to 7 mm, for example. With the reduced height of the annular discs 11 which do not comprise any spacers, the open flow area can be increased.

The base thickness of the annular discs is measured in the region between the spacers and, in the case of a trapezoidal cross-section, on the thicker side in the region between the spacers. The axial thickness or height of the annular discs in the region of the spacers corresponds to the sum of the base thickness and the filter width.

The height of the spacers determines the filter width of the separating device, that is to say the height of the separating gap between the individual annular discs. The filter width additionally determines which particle sizes of the solid particles to be removed, such as for example sand and rock particles, are allowed to pass through by the separating device and which particle sizes are not allowed to pass through. The height of the spacers is specifically set in the production of the annular discs.

For any particular separating device, the annular discs may have uniform base thickness and filter width, or the base thickness and/or filter width may vary along the length of the separating device (e.g., to account for varying pressures, temperatures, geometries, particle sizes, materials, and the like).

The outer contours of the annular discs may be configured with a bevel 22, as illustrated in Figures 3C - 3D, 4C - 4D, 5C - 5D, 6C - 6D and 7C - 7D. It is also possible to configure the annular discs with rounded edges. This may, for some applications, represent even better protection of the edges (versus straight edged) from the edge loading that is critical for the materials from which the annular discs are produced.

The circumferential surfaces (lateral surfaces) of the annular discs may be cylindrical. However, it is also possible to form the circumferential surfaces as outwardly convex, in order to achieve a better incident flow.

The outer diameter of the annular discs may be 20 - 250 mm, but outer diameters greater than 250 mm are also possible, as the application demands.

The radial ring width of the annular discs may lie in the range of 8 - 20 mm. These ring widths are suitable for separating devices with basepipe diameters in the range of 2⅜ to 5½ inches (corresponding to about 6 to 14 cm).

As already stated, the spacers arranged on the upper side, or on the upper side and the underside, respectively, of the annular discs have planiform contact with the adjacent annular disc. The spacers make a radial throughflow possible and therefore may be arranged radially aligned on the first major surface of the annular discs. The spacers may, however, also be aligned at an angle to the radial direction.

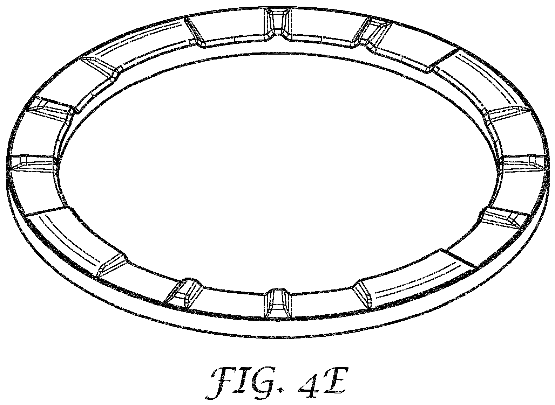

The transitions between the surface of the annular discs, i.e. the upper side, or the upper side and the underside of the annular discs, and the spacers are typically not formed in a step-shaped or sharp-edged manner. Rather, the transitions between the surface of the annular discs and the spacers are typically configured appropriately for the material from which the annular discs are made, i.e. the transitions are made with radii that are gently rounded. This is illustrated in Figure 4E.

The contact area of the spacers, that is to say the planar area with which the spacers are in contact with the adjacent annular disc are not particularly limited, and may be, for instance, rectangular, round, rhomboidal, elliptical, trapezoidal or else triangular, while the shaping of the corners and edges should always be appropriate for the material from which the annular discs are made, e.g. rounded.

Depending on the size of the annular discs, the contact area 14 of the individual spacers is typically between 4 and 100 mm².

The number of spacers may be even or odd and can be selected according to the application concerned or the pressure conditions to be expected, and depending on the mechanical properties of the material that is used for the annular discs. A minimum area percentage of the upper side 2, 8 and underside 10, respectively, of the annular discs should be covered with spacers, depending on pressure conditions and mechanical loads. The higher the pressures to be expected during operation, the more spacers should be provided in the structural design. The larger the annular discs, the more spacers should generally be provided in the structural design.

In some embodiments of the separating device disclosed herein, the annular discs are stacked in such a way that the spacers lie on top of each other, that is to say the spacers are arranged in alignment one above another.

Each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

In some embodiments, the annular discs are produced from a material which is independently selected from the group consisting of (i) ceramic materials; (ii) mixed materials having fractions of ceramic or metallic hard materials and a metallic binding phase; and (iii) powder metallurgical materials with hard material phases formed in-situ. These materials are typically chosen based upon their relative abrasion- and erosion-resistance to solid particles such as sands and other mineral particles and also corrosion-resistance to the extraction media and the media used for maintenance, such as for example acids.

The material which the annular discs comprise can be independently selected from this group of materials, which means that each annular disc could be made from a different material. But for simplicity of design and manufacturing, of course, all annular discs of the separating device could be made from the same material.

The ceramic materials which the annular discs can comprise or from which the annular discs are made can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fiber-reinforced ceramic materials.

Examples of oxidic ceramic materials are materials chosen from Al₂O₃, ZrO₂, mullite, spinel and mixed oxides. Examples of non-oxidic ceramic materials are SiC, B₄C, TiB₂ and Si₃N₄. Ceramic hard materials are, for example, carbides and borides. Examples of mixed materials with a metallic binding phase are WC-Co, TiC-Fe and TiB2-FeNiCr. Examples of hard material phases formed in situ are chromium carbides. An example of fiber-reinforced ceramic materials is C/SiC. The material group of fiber-reinforced ceramic materials has the advantage that it leads to still greater internal and external pressure resistance of the separating devices on account of its greater strength in comparison with monolithic ceramic.

The aforementioned materials are distinguished by being harder than the typically occurring hard particles, such as for example sand and rock particles, that is to say the HV (Vickers) or HRC (Rockwell method C) hardness values of these materials lie above the corresponding values of the surrounding rock. Materials suitable for the annular discs of the separating device according to the present disclosure have HV hardness values greater than 11 GPa, or even greater than 20 GPa.

All these materials are at the same time distinguished by having greater brittleness than typical unhardened steel alloys. In this sense, these materials are referred to herein as "brittle-hard".

Materials suitable for the annular discs of the separating device according to the present disclosure have moduli of elasticity greater than 200 GPa, or even greater than 350 GPa.

Materials with a density of at least 90%, more specifically at least 95%, of the theoretical density may be used, in order to achieve the highest possible hardness values and high abrasion and erosion resistances. Sintered silicon carbide (SSiC) or boron carbide may be used as the material for the annular discs. These materials are not only abrasion-resistant but also corrosion-resistant to the treatment fluids usually used for flushing out the separating device and stimulating the borehole, such as acids, for example HCI, bases, for example NaOH, or else steam.

Particularly suitable are, for example, SSiC materials with a fine-grained microstructure (mean grain size ≤ 5 µm), such as those sold for example under the names 3M™ silicon carbide type F and 3M™ silicon carbide type F plus from 3M Technical Ceramics, Kempten, Germany. Furthermore, however, coarse-grained SSiC materials may also be used, for example with a bimodal microstructure. In one embodiment, 50 to 90% by volume of the grain size distribution consisting of prismatic, platelet-shaped SiC crystallites of a length of from 100 to 1500 µm and 10 to 50% by volume consisting of prismatic, platelet-shaped SiC crystallites of a length of from 5 to less than 100 µm (3M™ silicon carbide type C from 3M Technical Ceramics, Kempten, Germany).

Apart from these single-phase sintered SSiC materials, liquid-phase-sintered silicon carbide (LPS-SiC) can also be used as the material for the annular discs. An example of such a material is 3M™ silicon carbide type T from 3M Technical Ceramics, Kempten, Germany. In the case of LPS-SiC, a mixture of silicon carbide and metal oxides is used as the starting material. LPS-SiC has a higher bending resistance and greater toughness, measured as a Klc value, than single-phase sintered silicon carbide (SSiC).

The annular discs of the separating device disclosed herein may be prepared by the methods that are customary in technical ceramics or powder metallurgy, that is to say by die pressing of pressable starting powders and subsequent sintering. The annular discs may be formed on mechanical or hydraulic presses in accordance with the principles of "near-net shaping", debindered and subsequently sintered to densities > 90% of the theoretical density. The annular discs may be subjected to 2-sided facing on their upper side and underside.

As already mentioned above, a perforated pipe 15 may be located in the central annular region 1, 7 (see Figures 1 and 2) of the separating device disclosed herein. The perforated pipe or base pipe is co-centric with the central annular region.

The base pipe is perforated, i.e. provided with holes, in the region of the central annular region; it is not perforated outside the region of the central annular region. The perforation 20 serves the purpose of directing the filtered fluid, i.e. the fluid flow freed of the solid particles, such as for example gas, oil or mixtures thereof, into the interior of the base pipe, from where it can be transported or pumped away.

Pipes such as those that are used in the oil and gas industry for metallic filters (wire wrap filter, metal mesh screen) may be used as the base pipe. The perforation is provided in accordance with patterns customary in the industry, for example 30 holes with a diameter of 9.52 mm may be introduced over a base pipe length of 0.3048 m (corresponding to 1 foot).

Threads 21 are usually cut at both ends of the base pipe 15 and can be used for screwing the base pipes together into long strings.

The base pipe can consist of a metallic material, a polymer or ceramic material. The base pipe may consist of a metallic material such as steel, for example steel L80. Steel L80 refers to steel that has a yield strength of 80 000 psi (corresponding to about 550 MPa). As an alternative to steel L80, steels that are referred to in the oil and gas industry as J55, N80, C90, T95, P110 and L80Cr13 (see Drilling Data Handbook, 8th Edition, IFP Publications, Editions Technip, Paris, France) may also be used. Other steels, in particular corrosion-resistant alloy and high-alloy steels, may also be used as the material for the base pipe. For special applications in corrosive conditions, base pipes of nickel-based alloys or Duplex stainless steels may also be used. It is also possible to use aluminium materials as the material for the base pipe, in order to save weight. Furthermore, base pipes of titanium or titanium alloys may also be used.

The inside diameter of the annular discs must be greater than the outside diameter of the base pipe. This is necessary on account of the differences with regard to the thermal expansion between the metallic base pipe and the material from which the annular discs are made and also for technical reasons relating to flow. It has been found to be favourable in this respect that the inside diameter of the annular discs is at least 0.5 mm and at most 10 mm greater than the outside diameter of the base pipe. In particular embodiments, the inside diameter of the annular discs is at least 1.5 mm and at most 5 mm greater than the outside diameter of the base pipe.

The outside diameter of the base pipe is typically from 1 inch to 10 inches.

The separating device as disclosed herein may further comprise two end caps 16, 17 (see Figures 1 and 2) at the upper and lower ends of the central annular region 1, 7. The end caps are produced from metal, usually steel and typically from the same material as the base pipe.

The end caps 16, 17 may be firmly connected to the base pipe 15. The end caps may be fastened to the base pipe by means of welding, clamping, riveting or screwing. During assembly, the end caps are pushed onto the base pipe after the central annular region and are subsequently fastened on the base pipe. In the embodiments of the separating device as disclosed herein that is shown in Figures 1 and 2, the end caps are fastened by means of welding. If the end caps are fastened by means of clamping connections, friction-increasing structural design measures are preferably taken. Friction-increasing coatings or surface structurings may be used for example as friction-increasing measures. The friction-increasing coating may be configured for example as a chemical-nickel layer with incorporated hard material particles, preferably diamond particles. The layer thickness of the nickel layer is in this case for example 10 - 25 µm; the average size of the hard particles is for example 20 - 50 µm. The friction-increasing surface structures may be applied for example as laser structuring.

The separating device as disclosed herein may further comprise a thermal compensator 18 at the upper end or at the lower end or at both ends of the central annular region (Figure 2). The thermal compensator serves to compensate for the different thermal expansions of the base pipe and the central annular region, from ambient temperature to operation temperature. The thermal compensator may for example comprise one or more springs, or a compensating bush consisting of a material on the basis of polytetrafluoroethylene (PTFE), or a tubular double-walled liquid-filled container, the outer walls of which are corrugated in the axial direction.

To protect the brittle-hard annular discs from mechanical damage during handling and fitting into the borehole, the separating device may be surrounded by a tubular shroud 19 (see Figure 1) that can be freely passed through by a flow. This shroud may be configured for example as a coarse-mesh screen and preferably as a perforated plate. The shroud may be produced from a metallic material, such as from steel, particularly from corrosion-resistant steel. The shroud may be produced from the same material as that used for producing the base pipe.

The shroud can be held on both sides by the end caps; it may also be firmly connected to the end caps. This fixing is possible for example by way of adhesive bonding, screwing or pinning; the shroud may be welded to the end caps after assembly.

The inside diameter of the shroud must be greater than the outside diameter of the annular discs. This is necessary for technical reasons relating to flow. It has been found to be favorable in this respect that the inside diameter of the shroud is at least 0.5 mm and at most 15 mm greater than the outside diameter of the annular discs. The inside diameter of the shroud may be at least 1.5 mm and at most 5 mm greater than the outside diameter of the annular discs.

In Figures 3A - 3G, one embodiment of the central annular region of a separating device as disclosed herein is represented. Figures 3A - 3D show various details of an individual annular disc 2 of the central annular region 1. Figures 3E - 3G show the central annular region 1 constructed from annular discs 2 of Figures 3A - 3D, representing various details of the stack of annular discs. Figure 3A shows a plan view of the upper side 3 of the annular disc 2, Figure 3B shows a cross-sectional view along the sectional line denoted in Figure 3A by "3 B", Figures 3C - 3D show enlarged details of the cross-sectional view of Figure 3B. The enlarged detail of Figure 3C is in the region of a spacer, the enlarged detail of Figure 3D is in the region between two spacers. Figure 3E shows a cross-sectional view of the central annular region 1 constructed from annular discs 2 of Figures 3A - 3D, Figures 3F - 3G show enlarged details of the cross-sectional view of Figure 3E. The enlarged detail of Figure 3F is in the region of a spacer, the enlarged detail of Figure 3G is in the region between two spacers.

The removal of the solid particles takes place at the inlet opening of a separating gap 6, which may be divergent, i.e. opening, in the direction of flow (see Figures 3D and 3G) and is formed between two annular discs 2 lying one over the other. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The upper side 3 of each annular disc 2 has ten spacers 5 distributed non-uniformly over the circumference of the annular discs. The distances between two adjacent spacers 5 on each upper side 3 are decreasing towards one of the spacers 5 (see Figure 3A; the distances are decreasing towards the spacer at the 12 o'clock position). In the region at an opposite side of the region with spacers having decreasing distances, there are fewer spacers allowing a higher inflow of fluid. In the example of Figure 3A, there is only one spacer at the 6 o'clock position, at the opposite side of the spacer at the 12 o'clock position.

The underside 4 does not comprise any spacers. The spacers 5 are of a defined height, with the aid of which the height of the separating gap 6 (gap width of the filter gap, filter width) is set. The spacers are not separately applied or subsequently welded-on spacers, they are formed directly in production, during the shaping of the annular discs.

The contact area 14 of the spacers 5 is planar (see Figure 3C), so that the spacers 5 have a planar contact area with the underside 4 of the adjacent annular disc. The upper side 3 of the annular discs is plane-parallel with the underside 4 of the annular discs in the region of the contact area 14 of the spacers 5, i.e. in the region of contact with the adjacent annular disc. The underside 4 of the annular discs is formed as smooth and planar and at right angles to the disc axis and the central axis of the central annular region. At the planar contact area of the spacers, the annular discs contact the respective adjacent annular disc.

The upper side 3 of an annular disc 2 having ten spacers 5 is inwardly sloping, in the regions between the spacers. The ring cross-section of the annular discs in the portions between the spacers is trapezoidal (see Figure 3D), the thicker side of the ring cross-section lying on the outside, i.e. on the inlet side of the flow to be filtered.

This embodiment, with the distances between two adjacent spacers decreasing towards one of the spacers, is particularly useful if the separating device is used in a reservoir where most of the inflow is coming from a specific direction. The inflow characteristics of the separating device can be adapted to the inflow coming from this direction.

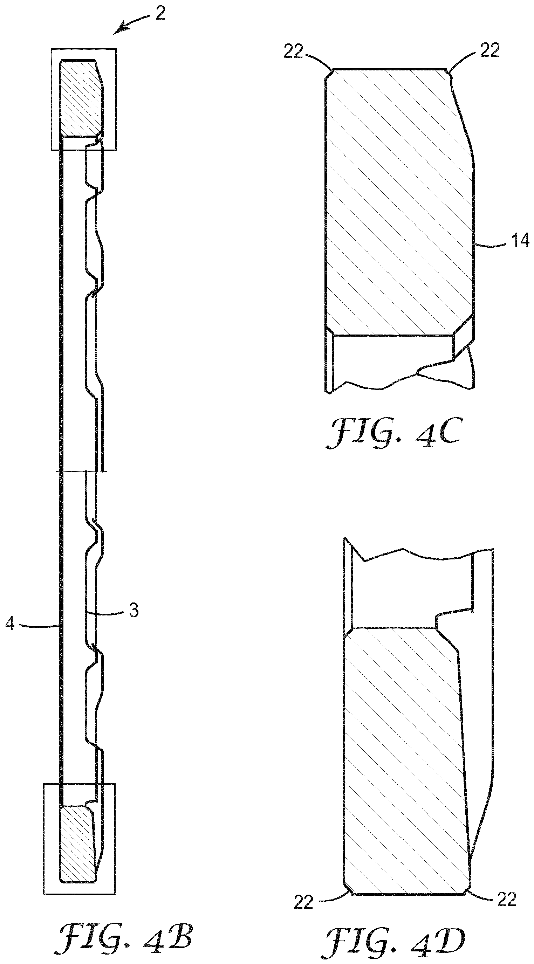

In Figures 4A - 4E, an annular disc of a further embodiment of a separating device as disclosed herein is represented. Figure 4A shows a plan view of the upper side 3 of the annular disc 2, Figure 4B shows a cross-sectional view along the sectional line denoted in Figure 4A by "4B", Figures 4C - 4D show enlarged details of the cross-sectional view of Figure 4B. The enlarged detail of Figure 4C is in the region of a spacer, the enlarged detail of Figure 4D is in the region between two spacers. Figure 4E shows a 3D representation of the annular disc 2.

The upper side 3 of each annular disc 2 has twelve spacers 5 distributed non-uniformly over the circumference of the annular discs. The widths of the spacers in circumferential direction on each upper side 3 of an annular disc 2 have two different lengths, i.e. the width of an individual spacer 5 in circumferential direction has either a larger first length or a smaller second length. The spacers having a width with the larger first length are distributed in an alternating manner with the spacers having a width with the smaller second length over the circumference of the annular discs. In the example of Figure 4A, the spacers 5 having a width of the larger first length are at the 3 o'clock, 6 o'clock, 9 o'clock and 12 o'clock positions, and between each two of these four spacers, two of the spacers 5 having a width of the smaller second length are arranged. In the regions with the spacers having a width with the smaller second length, a higher inflow of fluid is allowed, whereas the spacers having a width with a larger first length ensure the overall mechanical stability of the annular stack. Such a non-uniformly distribution of the spacers is useful in applications where the inflow of fluid loaded with sand and minerals is non-uniformly distributed along the circumference of the separating device. The inflow characteristics of the separating device can be adapted to the non-uniformly inflow.

The underside 4 does not comprise any spacers. The spacers 5 are of a defined height, with the aid of which the height of the separating gap 6 (gap width of the filter gap, filter width) is set. The spacers are not separately applied or subsequently welded-on spacers, they are formed directly in production, during the shaping of the annular discs.

The contact area 14 of the spacers 5 is planar (see Figure 4C), so that the spacers 5 have a planar contact area with the underside 4 of the adjacent annular disc. The upper side 3 of the annular discs is plane-parallel with the underside 4 of the annular discs in the region of the contact area 14 of the spacers 5, i.e. in the region of contact with the adjacent annular disc. The underside 4 of the annular discs is formed as smooth and planar and at right angles to the disc axis and the central axis of the central annular region. At the planar contact area of the spacers, the annular discs contact the respective adjacent annular disc.

The upper side 3 of an annular disc 2 having twelve spacers 5 is inwardly sloping, in the regions between the spacers. The ring cross-section of the annular discs in the portions between the spacers is trapezoidal (see Figure 4D), the thicker side of the ring cross-section lying on the outside, i.e. on the inlet side of the flow to be filtered.

In Figures 5A - 5G, a further embodiment of the central annular region of a separating device as disclosed herein is represented. Figures 5A - 5D show various details of individual annular discs 8 and 11 of the central annular region 7. Figures 5E - 5G show the central annular region 7 constructed from annular discs 8 and 11 of Figures 5E - 5G, representing various details of the stack of annular discs. Figure 5A shows a plan view of the upper side 9 and of the underside 10 of the annular disc 8, Figure 5B shows a cross-sectional view along the sectional line denoted in Figure 5A by "5B", Figures 5C - 5D show enlarged details of the cross-sectional view of Figure 5B. The enlarged detail of Figure 5C is in the region of the spacers, the enlarged detail of Figure 5D is in the region between the spacers. Figure 5E shows cross-sectional view of the central annular region 7 constructed from annular discs 8 and 11 of Figures 5A - 5D, Figures 5F - 5G show enlarged details of the cross-sectional view of Figure 5E. The enlarged detail of Figure 5F is in the region of a spacer, the enlarged detail of Figure 5G is in the region between the spacers.

The stack of annular discs 7 is composed of annular discs 8 and 11 which are stacked in an alternating manner. Every second annular disc in the stack is an annular disc 8 having ten spacers 5 on the upper side 9 of the annular disc 8 distributed over its circumference (see Figure 5A) and ten spacers 5 on the underside 10 of the annular disc 8 distributed non-uniformly over the circumference of the annular discs 8. The plan view of the upper side 9 of Figure 5A is identical to the plan view of the underside 10. The spacers 5 on the upper side 9 of the annular disc 8 may be positioned mirror-symmetrically to the spacers 5 on the underside 10 of the annular disc 8 as shown in Figure 5B, but it is also possible that the spacers on the upper side 9 are at positions different from the spacers of the underside 10.

The distances between two adjacent spacers 5 on each upper side 8 and each underside 9 are decreasing towards one of the spacers 5 (see Figure 5A; the distances are decreasing towards the spacer at the 12 o'clock position). In the region at an opposite side of the region with spacers having decreasing distances, there are fewer spacers allowing a higher inflow of fluid. In the example of Figure 5A, there is only one spacer at the 6 o'clock position, at the opposite side of the spacer at the 12 o'clock position.

The spacers 5 of the annular discs 8 are of a defined height, with the aid of which the height of the separating gap 6 (gap width of the filter gap, filter width) is set. The spacers are not separately applied or subsequently welded-on spacers, they are formed directly in production, during the shaping of the annular discs.

The respectively adjacent annular discs of the annular discs 8 in the stack of annular discs 7 are annular discs 11 as shown in Figures 5E - 5G. The upper side 9 and the underside 10 of the annular discs 8 do not comprise any spacers.

The removal of the solid particles takes place at the inlet opening of a separating gap 6, which may be divergent, i.e. opening, in the direction of flow (see Figures 5D and 5G) and is formed between two adjacent annular discs lying one over the other. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The contact area 14 of the spacers 5 is planar (see Figures 5C, 5E), so that the spacers 5 have a planar contact area with the underside 10 or upper side 9 of the adjacent annular disc 8. The upper side 9 of the annular discs 8 is plane-parallel with the underside 10 of the annular discs 8 in the region of the contact area 14 of the spacers 5, i.e. in the region of contact with the adjacent annular disc. At the planar contact area of the spacers, the annular discs contact the respective adjacent annular disc 11.

The upper side 9 and the underside 10 of the annular discs 8 is formed as smooth and planar and at right angles to the disc axis and the central axis of the central annular region.

The upper side 9 and the underside 10 of an annular disc 8 having ten spacers 5 is inwardly sloping, in the regions between the spacers 5. The ring cross-section of the annular discs in the portions between the spacers is trapezoidal (see Figure 5D), the thicker side of the ring cross-section lying on the outside, i.e. on the inlet side of the flow to be filtered.

This embodiment, with the distances between two adjacent spacers decreasing towards one of the spacers, is particularly useful if the separating device is used in a reservoir where most of the inflow is coming from a specific direction. The inflow characteristics of the separating device can be adapted to the inflow coming from this direction.

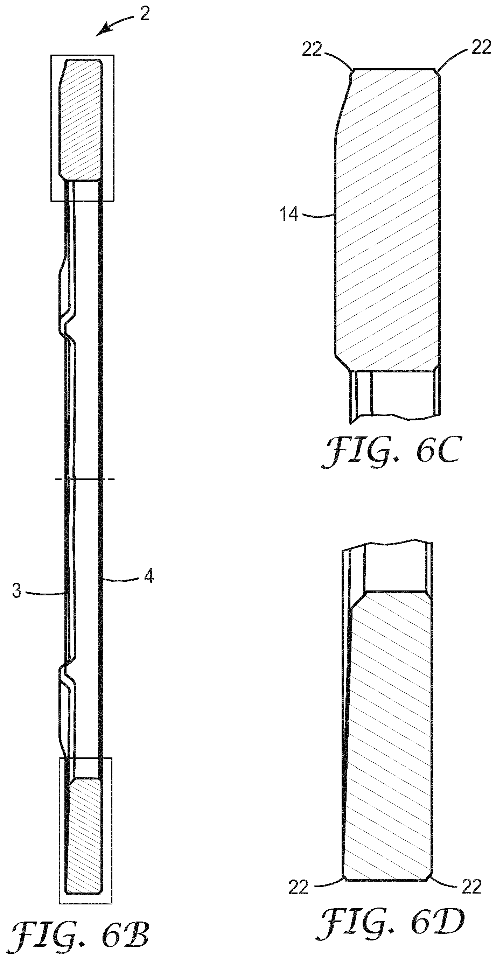

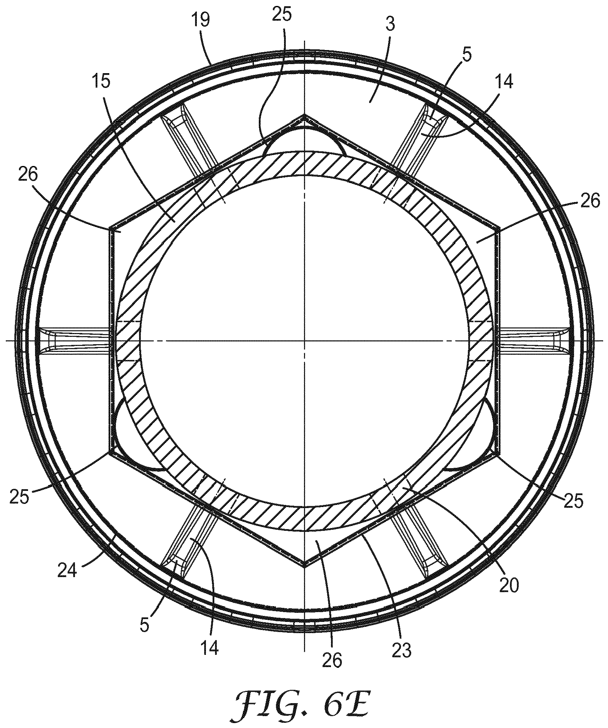

In Figures 6A - 6E, various details of a further embodiment of a separating device as disclosed herein is represented. Figure 6A shows a plan view of the upper side 3 of an annular disc 2 of this embodiment, Figure 6B shows a cross-sectional view along the sectional line denoted in Figure 6A by "6B", Figures 6C - 6D show enlarged details of the cross-sectional view of Figure 6B. The enlarged detail of Figure 6C is in the region of a spacer, the enlarged detail of Figure 6D is in the region between two spacers. Figure 6E shows a plan view perpendicular to the central axis of the separating device of this embodiment.

The inner circumference 23 of the annular discs 2 has the shape of a regular hexagon. In the example of Figures 6A - 6E, the outer circumference 24 of the annular discs 2 has a circular shape. It is also possible that the outer circumference of the annular discs has a hexagonal shape. The upper side 3 of each annular disc 2 has six spacers 5 distributed over the circumference of the annular discs 2. The six spacers 5 are positioned at an intermediate position between the six corners of the hexagon of the inner circumference 23 of the annular discs 2. It is also possible that the spacers are positioned closer to the corners of the hexagon, or at the corners of the hexagon. In Figure 6A, the corners of the inner circumference 23 of the annular disc 2 are designed with sharp edges, but it is also possible that the edges of the polygon have rounded edges.

The underside 4 of the annular discs 2 does not comprise any spacers. The spacers 5 are of a defined height, with the aid of which the height of the separating gap (gap width of the filter gap, filter width) is set. The spacers are not separately applied or subsequently welded-on spacers, they are formed directly in production, during the shaping of the annular discs.

The contact area 14 of the spacers 5 is planar (see Figure 6C), so that the spacers 5 have a planar contact area with the underside 4 of the adjacent annular disc. The upper side 3 of the annular discs is plane-parallel with the underside 4 of the annular discs in the region of the contact area 14 of the spacers 5, i.e. in the region of contact with the adjacent annular disc. The underside 4 of the annular discs is formed as smooth and planar and at right angles to the disc axis and the central axis of the central annular region. At the planar contact area of the spacers, the annular discs contact the respective adjacent annular disc.

The upper side 3 of an annular disc 2 having six spacers 5 is inwardly sloping, in the regions between the spacers. The ring cross-section of the annular discs in the portions between the spacers is trapezoidal (see Figure 6D), the thicker side of the ring cross-section lying on the outside, i.e. on the inlet side of the flow to be filtered.

In Figure 6E, showing a plan view perpendicular to the central axis of the separating device of this embodiment, it can be seen how the annular discs 2 with the hexagonal shape of the inner circumference have been stacked on the base pipe 15. The base pipe 15 is shown in Figure 6E with its perforations 20. At the outer circumference of the base pipe 15, three bands 25 are positioned parallel to the central axis of the separating device. The bands 25 have a convex shape, the convex side of their curvature being oriented outwards and towards the hexagonal inner circumference 23 of the annular discs 2. The annular discs 2 are pushed onto these bands 25 during assembly, whereby centring of the annular discs on the basepipe is achieved. On account of their function, these bands may also be referred to as centring bands. The centring bands are elastically deformable, especially in the radial direction. The material of the centring bands should preferably be chosen such that it does not corrode under operating conditions and it must be oil- water- and temperature-resistant. Metal or plastic is suitable as the material for the centring bands, preferably metal alloys on the basis of iron, nickel an cobalt, more preferably steel, more preferably spring strip steel. For example, spring strip steel with the material number 1.4310, of a spring-hard configuration, may be used as the material for the centring bands. The width of the centring bands may be for example 16 mm and the thickness 0.18 mm.

The centring bands 25 are positioned in the six corners of the inner circumference 23 of the annular discs 2 (see Figure 6E). During assembly of the separating device, with the inner circumference 23 of the annular discs 2 having a polygonal shape, it is secured that the annular discs are kept in their correct position and that they do not rotate against one another. The space 26 between the base pipe 15 and the annular discs 2 at the edges of the hexagonal inner circumference of the annular discs is larger than the space if the annular discs would have a circular inner circumference. Therefore, more space for annular flow is available at the edges of the hexagon which allows for a larger inflow of fluid into the separating device or a reduced pressure loss, respectively.

The separating device shown in Figures 6A - 6E is surrounded by a tubular shroud 19 that can be freely passed through by a flow. The shroud 19 protects the brittle-hard annular discs from mechanical damage during handling and fitting into the borehole. The shroud is configured as a perforated plate (see Figure 6E). The shroud is produced from a corrosion-resistant steel. The inside diameter of the shroud is greater than the outside diameter of the annular discs. At the upper and lower end of the shroud, there is provided a recess at the inner circumference of the shroud for easier fixation to the end cap.

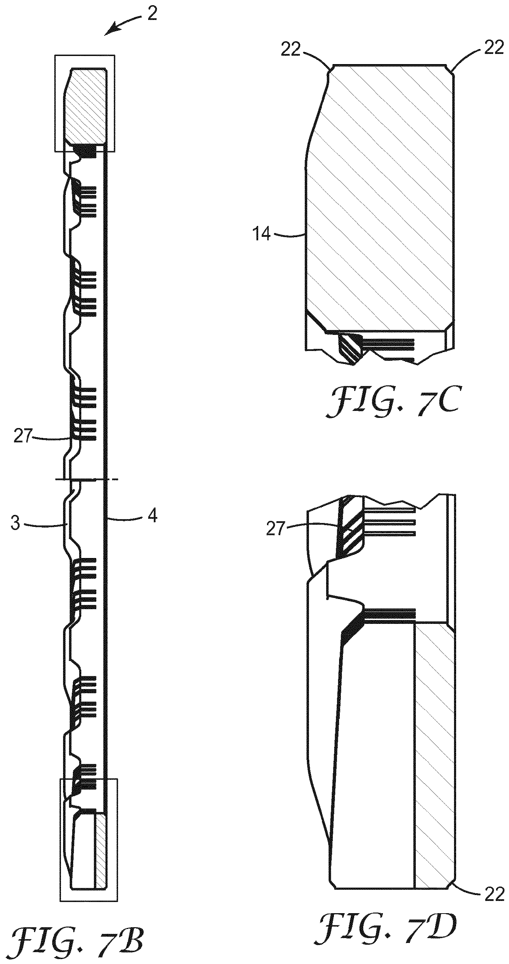

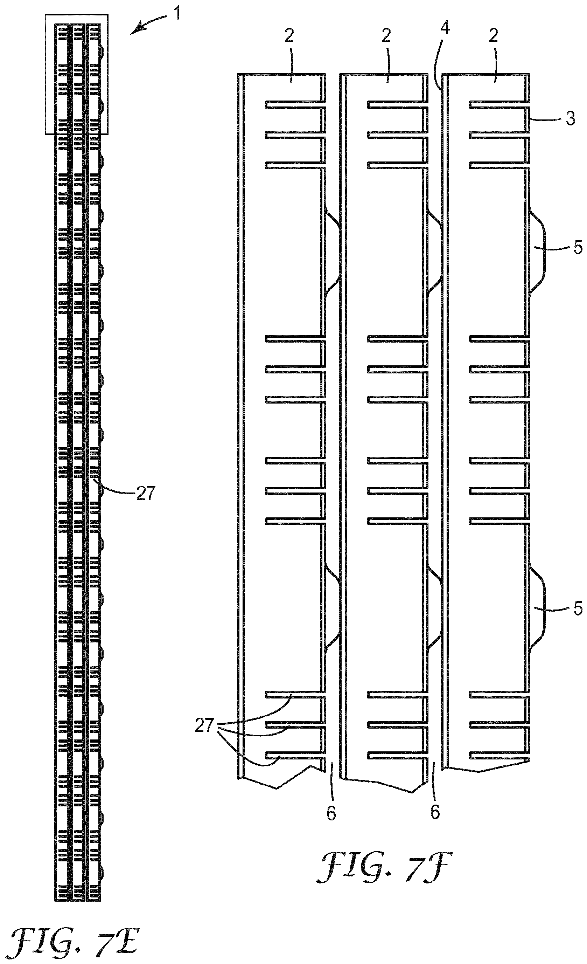

In Figures 7A - 7F, various details of a further embodiment of a separating device as disclosed herein is represented. Figure 7A shows a plan view of the upper side 3 of an annular disc 2 of this embodiment, Figure 7B shows a cross-sectional view along the sectional line denoted in Figure 7A by "7B", Figures 7C - 7D show enlarged details of the cross-sectional view of Figure 7B. The enlarged detail of Figure 7C is in the region of a spacer, the enlarged detail of Figure 7D is in the region between two spacers. Figure 7E shows the central annular region 1 of the separating device of this embodiment, in a view of the outer lateral surface rolled out along the outer circumference of the stack of annular discs 2. Figure 7F shows a detail of Figure 7E.

The upper side 3 of each annular disc 2 has sixteen spacers 5 distributed over the circumference of the annular discs 2. In the example of Figure 7A, the spacers are distributed uniformly over the circular circumference of the annular discs, but it is also possible to have a non-uniform distribution of the spacers, as the application demands. The underside 4 of the annular discs 2 does not comprise any spacers. The spacers 5 are of a defined height, with the aid of which the height of the separating gap (gap width of the filter gap, filter width) is set. The spacers are not separately applied or subsequently welded-on spacers, they are formed directly in production, during the shaping of the annular discs.

The contact area 14 of the spacers 5 is planar (see Figure 7C), so that the spacers 5 have a planar contact area with the underside 4 of the adjacent annular disc. The upper side 3 of the annular discs is plane-parallel with the underside 4 of the annular discs in the region of the contact area 14 of the spacers 5, i.e. in the region of contact with the adjacent annular disc. The underside 4 of the annular discs is formed as smooth and planar and at right angles to the disc axis and the central axis of the central annular region. At the planar contact area of the spacers, the annular discs contact the respective adjacent annular disc.

The upper side 3 of an annular disc 2 having sixteen spacers 5 is inwardly sloping, in the regions between the spacers. The ring cross-section of the annular discs in the portions between the spacers is trapezoidal (see Figure 7D), the thicker side of the ring cross-section lying on the outside, i.e. on the inlet side of the flow to be filtered.

The annular discs 2 have on their upper side 3 one or more recesses 27 in axial direction (see Figures 7A). The recesses 27 are extending from the outer circumference to the inner circumference of the annular discs 2. The recesses 27 are in the regions between the spacers. The height of the recesses 27 in axial direction is smaller than the height of the annular discs 2 (see Figures 7B and 7F). The height of the separating gap 6 corresponds to the width of the recesses 27 in circumferential direction.

The number of the recesses may be one or more than one and is not specifically limited. For example, up to 10, or up to 50, or up to 100 recesses may be provided. More than 100 recesses are also possible.

By the recesses 27, the gap flow area or inflow area of the separating device can be increased. This allows to increase the inflow of fluid into the separating device and to reduce the pressure loss of the separating device.

The separating device according to the present disclosure may be used for removing solid particles from a fluid. A fluid as used herein means a liquid or a gas or combinations of liquids and gases.

The separating device according to the present disclosure may be used in extraction wells in oil and/or gas reservoirs for separating solid particles from volumetric flows of mineral oil and/or natural gas. The separating device may also be used for other filtering processes for removing solid particles from fluids outside of extraction wells, processes in which a great abrasion resistance and a long lifetime of the separating device are required, such as for example for filtering processes in mobile and stationary storage installations for fluids or for filtering processes in naturally occurring bodies of water, such as for instance in the filtering of seawater. The separating device disclosed herein can also be used in a process for extracting ores and minerals. In the extraction of ore and many other minerals, there are problems of abrasion and erosion in the removal of solid particles from fluid flows. The separating device according to the present disclosure is particularly suitable for the separation of solid particles from fluids, in particular from mineral oil, natural gas and water, in extraction wells in which high and extremely high rates of flow and delivery volumes occur.

## Claims

1. A separating device for removing solid particles from fluids, comprising a stack of at least three annular discs defining a central annular region (1) along a central axis, each annular disc (2) having an upper side (3) and an underside (4), wherein the upper side (3) of each annular disc (2) each has at least three spacers (5), and wherein the upper side (3) of each annular disc (2) contacts the underside (4) of the adjacent annular disc defining a separating gap (6), and wherein the separating device has one or more of the following features:
(i) the at least three spacers (5) are distributed non-uniformly over the circumference of the annular discs (2),
(ii) the inner circumference (23) of the annular discs (2) has a polygon shape,
(iii) the annular discs (2) have on their upper side (3) one or more recesses (27) in axial direction, wherein the height of the separating gap (6) corresponds to the width of the recesses (27) in circumferential direction, and wherein the height of the recesses (27) in axial direction is smaller than the height of the annular discs (2), and wherein the recesses (27) are extending from the outer circumference (24) to the inner circumference (23) of the annular discs (2).

2. A separating device for removing solid particles from fluids, comprising a stack of at least three annular discs defining a central annular region (7) along a central axis, each annular disc (8, 11) having an upper side (9, 12) and an underside (10, 13), wherein the upper side (9) and the underside (10) of every second annular disc (8) in the stack each has at least three spacers (5), and wherein the upper side (12) and the underside (13) of the respectively adjacent annular discs (11) do not comprise any spacers, and wherein the upper side (9, 12) of each annular disc contacts the underside (10, 13) of the adjacent annular disc defining a separating gap (6), and wherein the separating device has one or more of the following features:
(i) the at least three spacers (5) of every upper side (9) and of every underside (10) of every second annular disc (8) in the stack are distributed non-uniformly over the circumference of the annular discs (8),
(ii) the inner circumference (23) of the annular discs (8, 11) has a polygon shape,
(iii) the annular discs (8) have on their upper side (9) and on their underside (10) one or more recesses (27) in axial direction, wherein the height of the separating gap (6) corresponds to the width of the recesses (27) in circumferential direction, and wherein the height of the recesses (27) in axial direction is smaller than the height of the annular discs (8), and wherein the recesses (27) are extending from the outer circumference (24) to the inner circumference (23) of the annular discs (8).

3. The separating device according to claim 1 or 2, wherein the at least three spacers (5) of each upper side (3, 9) and of each underside (10) having at least three spacers have a planar contact area (14) with the adjacent annular disc.

4. The separating device according to any of claims 1 to 3, wherein the at least three spacers (5) of each upper side (3, 9) and of each underside (10) having at least three spacers are distributed non-uniformly over the circumference of the annular discs (2, 8), and wherein the distances between two adjacent spacers (5) on each upper side (3, 9) having at least three spacers and on each underside (10) having at least three spacers have at least two different lengths.

5. The separating device according to any of claims 1 to 4, wherein the at least three spacers (5) of each upper side (3, 9) and of each underside (10) having at least three spacers are distributed non-uniformly over the circumference of the annular discs (2, 8), and wherein the widths of the spacers in circumferential direction on each upper side (3, 9) of an annular disc (2, 8) having at least three spacers and on each underside (10) of an annular disc (8) having at least three spacers have at least two different lengths.

6. The separating device according to claim 5, wherein the widths of the at least three spacers (5) in circumferential direction have two different lengths, and wherein the spacers having a width with a larger length are distributed in an alternating manner with the spacers having width with a smaller length over the circular circumference of the annular discs.

7. The separating device according to any of claims 1 to 6, wherein every upper side (3, 9) of an annular disc (2, 8) having at least three spacers has at least four spacers (5), and wherein every underside (10) of an annular disc (8) having at least three spacers has at least four spacers (5), and wherein the at least four spacers (5) are distributed non-uniformly over the circumference of the annular discs (2, 8), and wherein the distances between two adjacent spacers on each upper side (3, 9) having at least four spacers are decreasing towards one of the spacers (5), and wherein the distances between two adjacent spacers on each underside (10) having at least four spacers are decreasing towards one of the spacers (5).

8. The separating device according to any of claims 1 to 7, wherein the inner circumference (23) of the annular discs (2, 8, 11) has a polygon shape, and wherein the polygon is a regular polygon.

9. The separating device according to any of claims 1 to 8, wherein the inner circumference (23) of the annular discs (2, 8, 11) has a polygon shape, and wherein the outer circumference (24) of the annular discs (2, 8, 11) has a polygon shape.

10. The separating device according to any of claims 1 to 9, wherein the annular discs (2, 8, 11) in the stack (1, 7) of annular discs are stacked in such a way that the spacers (5) are arranged in alignment one above another.

11. The separating device according to any of claims 1 to 10, further comprising, alone or in combination,
- a perforated pipe (15), which is located inside the concentric stack (1, 7) of at least three annular discs and on which the annular discs are stacked,
- an end cap (16) at the upper end of the central annular region and an end cap (17) at the lower end of the central annular region (1, 7),
- a thermal compensator (18) at the upper end and/or at the lower end of the central annular region,
- a shroud (19) for protection from mechanical damage.

12. The separating device according to any of claims 1 to 11, wherein each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

13. The separating device according to any of claims 1 to 12, wherein the material of annular discs is sintered silicon carbide (SSiC) or boron carbide.

14. Use of the separating device of any of claims 1 to 13 for removing solid particles from fluids
in a process for extracting fluids from extraction wells, or
in water or in storage installations for fluids, or
in a process for extracting ores and minerals.
